# EUROPEAN PATENT SPECIFICATION

(11) **EP 3 820 782 B1**
(45) Date of publication and mention of the grant of the patent: **30.11.2022**
(21) Application number: 18932678.8
(22) Date of filing: 04.09.2018
(51) Int. Cl.: B65D 41/34, B65D 55/16

(54) **CAP FOR CONTAINER**
DECKEL FÜR EINEN BEHÄLTER
BOUCHON POUR RÉCIPIENT

(43) Date of publication of application: 19.05.2021
(73) Proprietor: ThisCap, Inc., Las Vegas, NV 89117 (US)
(72) Inventor: MAGUIRE, Michael Joseph, Las Vegas, NV 89117 (US)
(74) Representative: Hernandez, Yorck
(86) International application number: PCT/US2018/049410
(87) International publication number: WO 2020/050823

(56) References cited:
- KR-B1- 100 880 006
- US-A- 3 904 062
- US-A1- 2009 236 304
- US-A1- 2015 251 827
- US-A1- 2015 251 827
- US-A1- 2017 203 896
- US-B1- 6 474 491
- US-B1- 6 474 491

## Description

### FIELD OF THE INVENTION

This application pertains to caps for containers and pertains specifically to caps that remain attached to the container after the container is opened.

### BACKGROUND

In general, the cap of a conventional container is completely separated from its container once the container is opened. For that reason, it is easy for the separated cap to be dropped, accidentally disposed of, and/or misplaced/lost. Moreover, the separated cap when dropped can easily become soiled by coming in to contact with the ground or other uncontrolled surfaces resulting in the cap becoming no longer reusable. Furthermore, the discarded or misplaced/lost separated caps are able to and will pollute the environment and cause additional environmental problems. Therefore, in order to solve these problems, the industry has developed a few caps that will remain connected to their containers while their containers are in an open state. These few caps are thereby prevented from being separated from their containers, dropped, accidentally discarded, misplaced/lost, soiled by contact with the ground or other uncontrolled surfaces or able to pollute the environment or cause additional environmental problems.

Nonetheless, the currently existing caps with the above-mentioned functions can use complex designs and complicated connecting structures that necessitate some difficult physical manipulation by the user to return the caps to a closed sealed state. Manufacture of caps with these structures can also be complex or expensive.
Document KR100880006B1 discloses a cap for a container according to the preamble of claim 1.

### BRIEF DESCRIPTION OF THE DRAWINGS

FIG. 1 is a three-dimensional schematic diagram showing an embodiment of the cap for a container in accordance with an embodiment not forming part of the invention.
FIG. 2A-2G are schematic diagrams showing different embodiments of a cap for a container not forming part of the invention.
FIG. 3 is a three-dimensional schematic diagram showing an embodiment for a cap being separated from a container not forming part of the invention.
FIG. 4, FIG. 5, FIG. 6, FIG. 7, FIG. 8, FIG. 9 and FIG. 10 illustrate a cap according to the invention that after being removed from a container, may be held against the container in a flipped position in accordance with implementations.
FIG. 11, FIG. 12, FIG. 13 and FIG. 14 illustrate another cap according to the invention that after being removed from a container, may be held against the container in a flipped position.
FIG. 15 shows an alternative pattern of incisions on a cap in accordance with an implementation.

### DETAILED DESCRIPTION

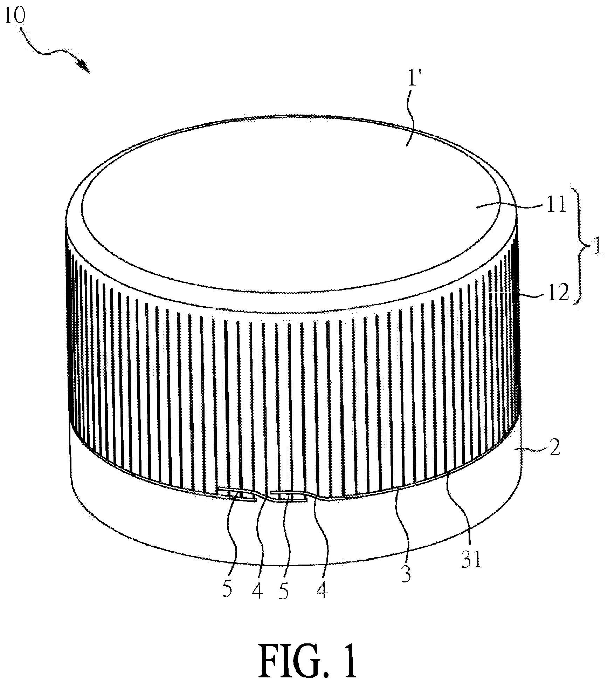

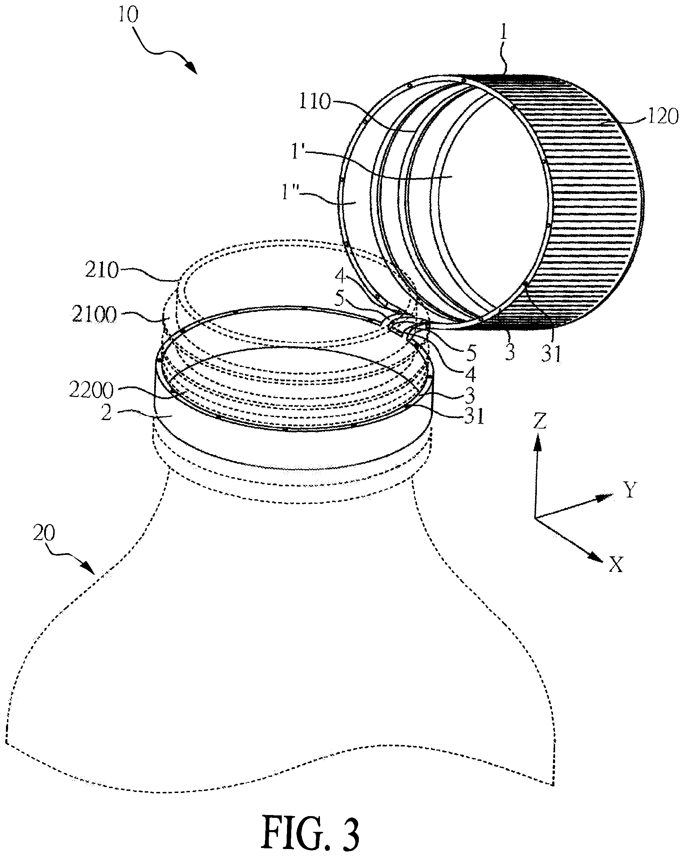

FIG. 1 is a three-dimensional schematic diagram showing an embodiment of a cap for a container. As FIG. 1 shows, the cap 10 of the present example includes a main body 1 having a top plate 11 and a circular sidewall 12. The two opposite sides of the circular sidewall 12 circularly connect to each other. One periphery of the circular sidewall 12 connects to one surface of the top plate 11 forming a closed end 1'. The other periphery of the circular sidewall 12 at the opposite side of the closed end 1' forms an opened end 1" (shown in FIG. 3). The cap 10 of the present example also contains a ring member 2, which is located at the opened end 1" of the main body 1. The ring member 2 is separated from the main body 1 by penetration lines which can be formed as part of the formation of cap 10. For example, the penetration lines are formed as part of an injection molding process or other manufacturing process in which cap 10 is formed.

For example, penetration lines may also be formed by incision. While in the description below penetration lines are often referred to as incision lines, the penetration lines can be formed by methods other than incision. The ring member 2 is separated from the main body 1 by a first incision line 3 located in between the opened end 1" of the main body 1 and the ring member 2. The first incision line 3 possesses a plurality of connecting pins 31. The plurality of
connecting pins 31 located along the first incision line 3 connect the main body 1 and the ring member 2 at the two sides of the first incision line 3. The two ends of the first incision line 3 are separated by a plurality of connecting portions 5. The plurality of connecting portions 5 connect the main body 1 and the ring member 2 together. Located at one side of the plurality of connecting portions 5 is a plurality of second incision lines 4. The plurality of second incision lines 4 are also located either on the main body 1 or the ring member 2. The two ends of the plurality of second incision lines 4 and itself are not connected. The plurality of second incision lines 4 do not overlap with the first incision line 3.

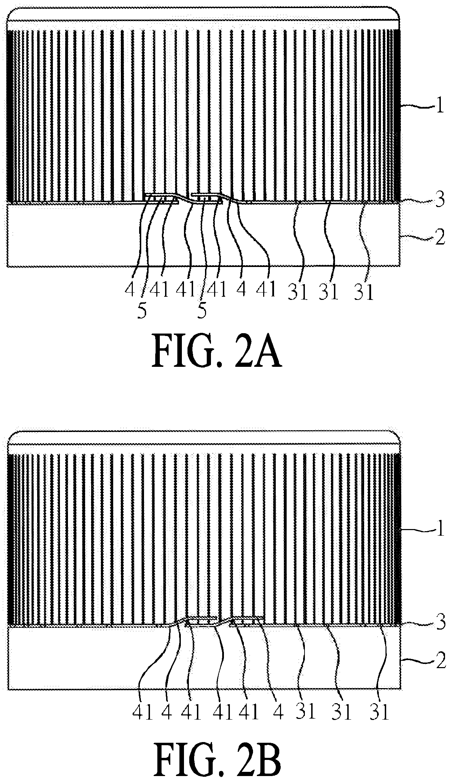

As FIG. 2A shows, in the present example, the plurality of connecting portions 5 are formed in between the first incision line 3 and the plurality of second incision lines 4. The shape of the plurality of connecting portions 5 is not particularly limited. The shape of the plurality of the connecting portions 5 is depended on the shapes of the first incision line 3 and the plurality of second incision lines 4 located at the sides of the plurality of connecting portions 5. In the present example, the shape of the plurality of connecting portions 5 is cuboid (shown in FIG. 3). The quantity of the plurality of connecting portions 5 is not particularly limited. However, in the present example, the quantity of the plurality of connecting portions 5 is 2. The spacing between each of the plurality of connecting portions 5 is not particularly limited as well. However, in the present example, each of the plurality of connecting portions 5 is separated by parts of the plurality of second incision lines 4.

The quantity of the plurality of second incision lines 4 is not particularly limited. However, in the present example, the quantity of the plurality of second incision lines 4 is 2. As FIG. 2A shows, only the main body 1 possesses the plurality of second incision lines 4. One of the two second incision lines 4 is connected to parts of the first incision line 3. Furthermore, parts of the plurality of second incision lines 4 are parallel to the first incision line 3.

The first incision line 3 and the plurality of second incision lines 4 are not particularly limited. The first incision line 3 and the plurality of second incision lines 4 can individually be preferred to be straight lines, curved lines, polylines, arc lines, or the combinations thereof. In the present
example, the first incision line 3 is a straight line. The plurality of second incision lines 4 can also be more preferably be L-shaped lines, S-shaped lines, Z-shaped lines, or the combinations thereof. In the present example, the plurality of second incision lines 4 are Z-shaped lines. The corners 41 of the plurality of second incision lines 4 are not particularly limited. The corners 41 of the plurality of second incision lines 4 are preferred to be curved corners, chamfered corners, sharp corners, or the combinations thereof. In the present example, the corners 41 of the plurality of second incision lines 4 are curved corners.

The first incision line 3 and the plurality of second incision lines 4 surround parts of the circular sidewall 12 or the ring member 2, but do not fully surround the circular sidewall 12 or the ring member 2. The lengths of the first incision line 3 and the plurality of second incision lines 4 surrounded the circular sidewall 12 or the ring member 2 are not particularly limited. In the present example, the length of the first incision line 3 surrounded the circular sidewall 12 or the ring member 2 is longer than the lengths of each of the plurality of second incision lines 4 surrounded the circular sidewall 12 or the ring member 2. In the present invention, it is preferred that the first incision line 3 surrounds larger than 3/4 of the circular sidewall 12 or the ring member 2 and more preferably larger than 4/5 of the circular sidewall 12 or the ring member 1. In the present example, the first incision line 3 surrounds larger than 4/5 of the circular sidewall 12 or the ring member 2. It is preferred that the plurality of second incision lines 4 surround less than 3/4 of the circular sidewall 12 or the ring member 2, more preferably less than 1/2 of the circular sidewall 12 or the ring member 2, and most preferably less than 1/4 of the circular sidewall 12 or the ring member 2. In the present example, the plurality of second incision lines 4 surround less than 1/5 of the circular sidewall 12.

FIG. 2B is a schematic diagram showing another embodiment of the cap for a container. The cap of the present example and the cap shown in FIG. 1 are the same except that the plurality of second incision lines 4 and the plurality of second incision lines 4 shown in FIG. 2A are opposite to each other. Nevertheless, the opening directions of the cap and that of the cap
shown in FIG. 2A are still the same (both are in the anti-clockwise direction; that is rotation in the right direction in FIG. 2A or FIG. 2B).

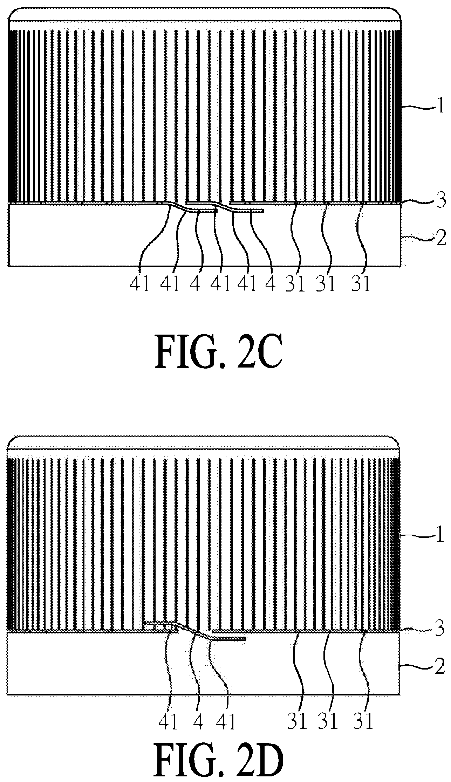

FIG. 2C is a schematic diagram showing another embodiment of the cap for a container. The cap of the present example and the cap shown in FIG. 1 are the same except that only the ring member 2 possesses the plurality of second incision lines 4 and the plurality of second incision lines 4 surround less than 1/5 of the ring member 2.

FIG. 2D is a schematic diagram showing another embodiment of the cap for a container. The cap of the present example and the cap shown in FIG. 1 are the same except that the quantity of the plurality of second incision lines 4 is 1, the second incision line 4 extends from the main body 1 to the ring member 2 or from the ring member 2 to the main body 1, the second incision line 4 and the first incision line 3 are not connected, the corners 41 of the second incision line 4 (Z-shaped line) are sharp corners, and the second incision line 4 surrounds less than 1/5 of the circular sidewall 12 and less than 1/5 of the ring member 2.

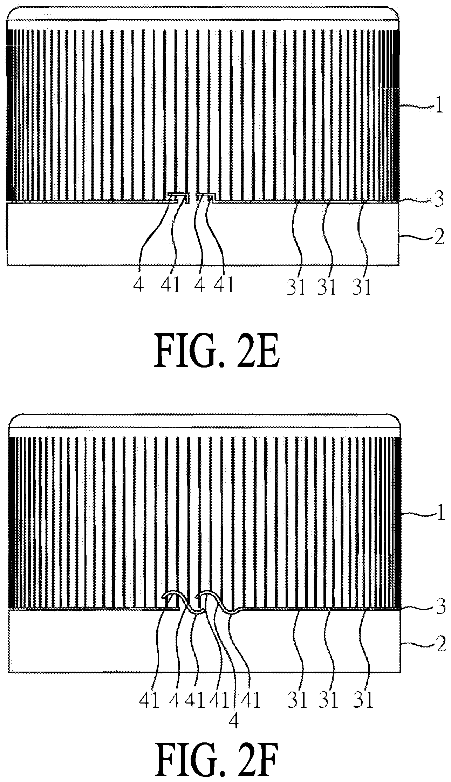

FIG. 2E is a schematic diagram showing another embodiment of the cap for a container. The cap of the present example and the cap shown in FIG. 1 are the same except that the plurality of second incision lines 4 are L-shaped lines and the corners 41 of these L-shaped lines are sharp corners.

FIG. 2F is a schematic diagram showing another embodiment of the cap for a container. The cap of the present example and the cap shown in FIG. 1 are the same except that the plurality of second incision lines 4 and the first incision line 3 are not parallel to each other and the plurality of second incision lines 4 are S-shaped lines.

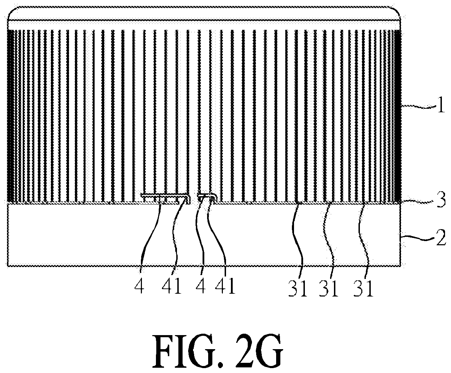

FIG. 2G is a schematic diagram showing another embodiment of the cap for a container. The cap of the present example and the cap shown in FIG. 2E are the same except that the corners 41 of the plurality of second incision lines 4 (L-shaped lines) are curved corners and one of the second incision lines 4 surrounds less than 1/2 of the circular sidewall 12.

FIG. 3 is a three-dimensional schematic diagram showing an embodiment of the cap for a container being separated
from a container, wherein the cap shown can be any one of the caps of any one of the above-mentioned examples. Hereinafter, the practical application of the cap will be further described in detail using the cap shown in FIG. 1.

The cap 10 provided can be used together with any conventional containers without any particular limitation as long as the cap 10 and the container 20 can be assembled together. The shape of the cap 10 is not particularly limited. As shown in FIG. 3, the inner side of the cap is circular. The shape of the container 20 is also not particularly limited as well. As shown in FIG. 3, the opening 210 of the container is a circular opening. The container 20 is preferred to be a round bottle or a round can. As shown in FIG. 3, the container 20 is a bottle with a circular opening.

The main body 1 of the cap 10 can control the opening and closing of the opening 210 of the container. As shown in FIG. 3, the inner side of the main body 1 has thread 110. Through a complementary thread structure 2100 at the outer side of the opening 210 of the container, the main body 1 can be screwed opened (in anti-clockwise direction) and screwed closed (not shown) (in clockwise direction) on the opening 210 of the container by rotation. IWhen the main body 1 of the cap 10 provided is screwed closed on the opening 210 of the container, the closed end 1' of the main body 1 will abut against the opening 210 of the container. Meanwhile, the opened end 1" of the main body 1 will face toward the opening 210 of the container and cover and fit on the opening 210 of the container. Consequently, the opening 210 of the container is in a closed state with the container 20 remaining sealed.

The outer side of the main body 1 of the cap 10 provided can have a knurled portion 120. When the container 20 is to be opened, the knurled portion 120 can facilitate applying a force to rotate and separate the main body 1 and the ring member 2. Depending on the actual needs, the first incision line 3 disposed between the main body 1 and the ring member 2 of the cap 10 provided can have a plurality of connecting pins 31 to connect the main body 1 and the ring member 2. The shape, size, quantity,
and spacing of the plurality of connecting pins 31 are not particularly limited. When the size and quantity of the plurality of connecting pins 31 of the first incision line 3 are smaller and the spacing of the plurality of connecting pins 31 is larger, the force needed to break the plurality of connecting pins 31 is smaller. On the contrary, when the size and quantity of the plurality of connecting pins 31 of the first incision line 3 are larger and the spacing of the plurality of connecting pins 31 is smaller, the force needed to break the plurality of connecting pins 31 is larger. In the present example, the size and quantity of the plurality of connecting pins 31 of the first incision line 3 are smaller and the spacing of the plurality of connecting pins 31 is larger. In addition, the plurality of second incision lines 4 do not possess a plurality of connecting pins 31. Therefore, the force needed to break the plurality of connecting pins 31 is smaller. Subsequently, users can separate the main body 1 and the ring member 2 more easily; that is, the cap 10 can be opened from the opening 210 of the container more easily.

When the main body 1 of the cap 10 has been screwed opened from the opening 210 of the container, the plurality of connecting portions 5 will connect the main body 1 and the ring member 2 together. Since the ring member 2 is fitted below a bulge portion 2200 of the opening 210 of the container; thus, the ring member 2 will not detach from the opening 210 of the container. As a result, the connection between the main body 1 separated from the opening 210 of the container with the ring member 2 will allow the main body 1 to still remain in a connected state with the container 20. Moreover, the plurality of connecting portions 5 can also allow the main body 1 to remain in an opened state. The plurality of connecting portions 5 will prevent the main body 1 from interfering the opening 210 of the container. The plurality of connecting portions 5 will also decrease the free movement of the main body 1. As a result, when emptying the contents from the container 20, the plurality of connecting portions 5 can prevent the main body 1 from touching other objects due to its free movement. For example, when the container 20 is a water bottle, when users are drinking from the water bottle, the plurality of connecting portions 5 will prevent the main body 1 from touching the faces and any body parts of the users. In addition, the plurality of connecting portions 5 can also prevent the residual contents at the inner side of the main
body 1 to spill out easily by decreasing the free movement of the main body 1. And since the ring member 2 fitted on the opening 210 of the container can freely rotate; hence, the plurality of connecting portions 5 will not be pulled off easily.

The cap provided can be made by using any materials known in the art, wherein the material for the cap is preferred to be plastic. The cap can be manufactured by any processes known in the art. For example, the manufacturing process of the cap is by injection molding. The first incision line and the plurality of second incision lines can be formed by any known methods. In all the above-mentioned examples, the first incision line and the plurality of second incision lines are formed by rotary cutting and the incisions are done by cutting tools or laser cutting.

Overall, the design and structure of the cap for a container are simple. Simply just by using a first incision line and a plurality of second incision lines, a plurality of connecting portions are created. The plurality of connecting portions created can connect the container with the cap separated from the container to prevent the cap from being lost or discarded. The plurality of connecting portions created can also maintain the cap in an opened state where the cap does not interfere the opening of the container and the free movement of the cap is decreased. The end result is a cap with an enhanced operating convenience. Unlike conventional caps, the cap of the present example does not require to additionally dispose a barrier structure in order to achieve the same functions of the cap described above.

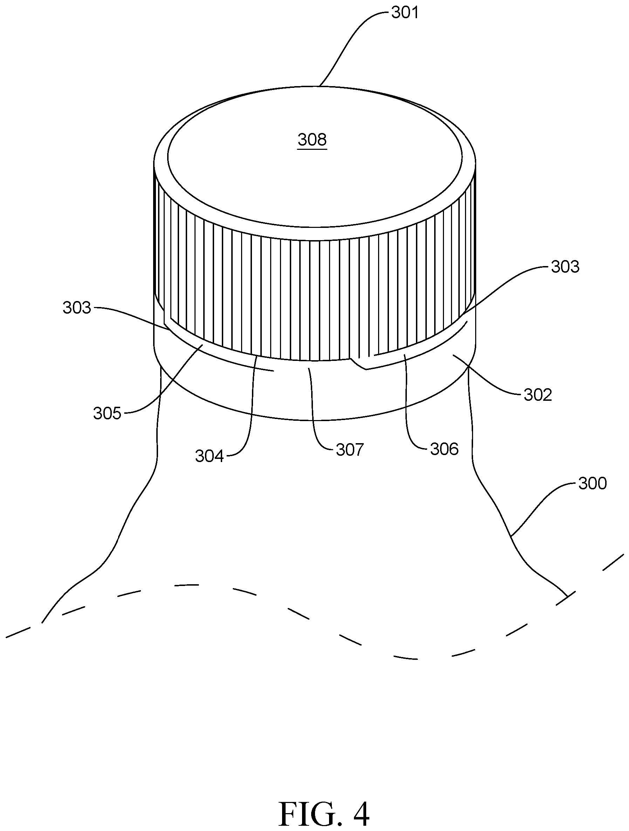

FIG. 4, FIG. 5, FIG. 6, FIG. 7, FIG. 8, FIG. 9 and FIG. 10 illustrate a cap 301 that after being removed from a container 300, may be held against container 300 in a flipped position. Specifically, in FIG. 4, a cap 301 is shown secured on a container 300. A first incision 303 and a second incision 304 form a connection portion 305 and a connection portion 306 between cap 301 and a ring member 302. In the embodiment shown in FIG. 4, a region 307 exists between a location where connection portion 305 is connected to ring member 302 and where connection portion 306 is connected to cap 301. A height of cap 301 and a diameter of cap 301 affect a length of region 307 and whether region 307 even exists, as dimensions of region 307, first incision 303 and second incision 304 are all dependent on sizing connection portion 305 and sizing connection portion 306
so that when cap 301 is removed from container 300, cap 301 may be held in a flipped position against container 300 by connection portion 305 and connection portion 306.

In the flipped position, a top surface 308 of cap 301 is held in a position where top surface 308 faces container 300. The length of connection portion 305 and the length of connection portion 306 are selected so that the elasticity of connection portion 305 and the elasticity of connection portion 306 allows cap 301 to be moved by a user into the flipped position against container 300 by stretching connection portion 305 and connection portion 306 and then the elasticity of connection portion 305 and the elasticity of connection portion 306 holds cap 301 in the flipped position against container 300 while a user drinks from the container.

When the user is temporarily done drinking from container 300, the elasticity of connection portion 305 and the elasticity of connection portion 306 allow cap 301 to be moved by a user out of the flipped position into an initial open position from which cap 301 can be screwed back onto container 300. For the case where a cap has a flip top design, the cap may be reattached by snapping the cap back onto the container.

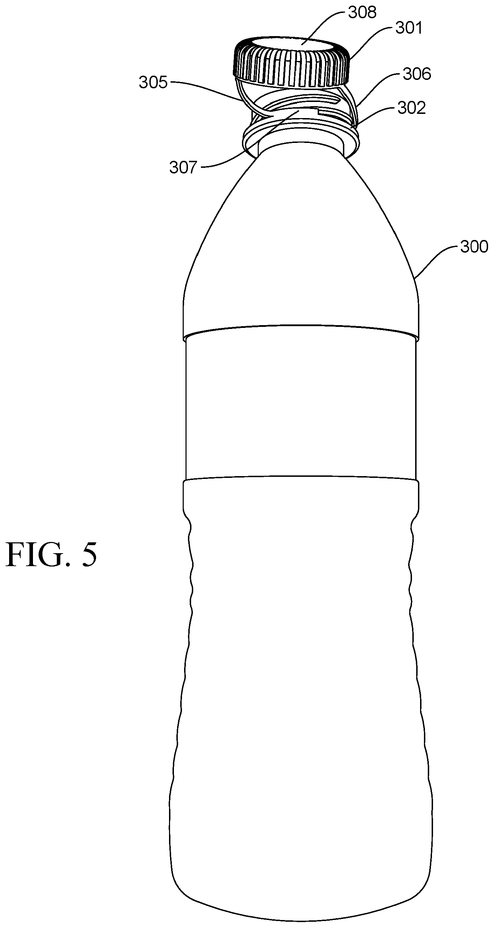

FIG. 5 shows cap 301 after cap 301 has been unscrewed from container 300. Connection portion 305 and connection portion 306 hold cap 301 to ring member 302. Top surface 308 of cap 301 is facing away from container 300.

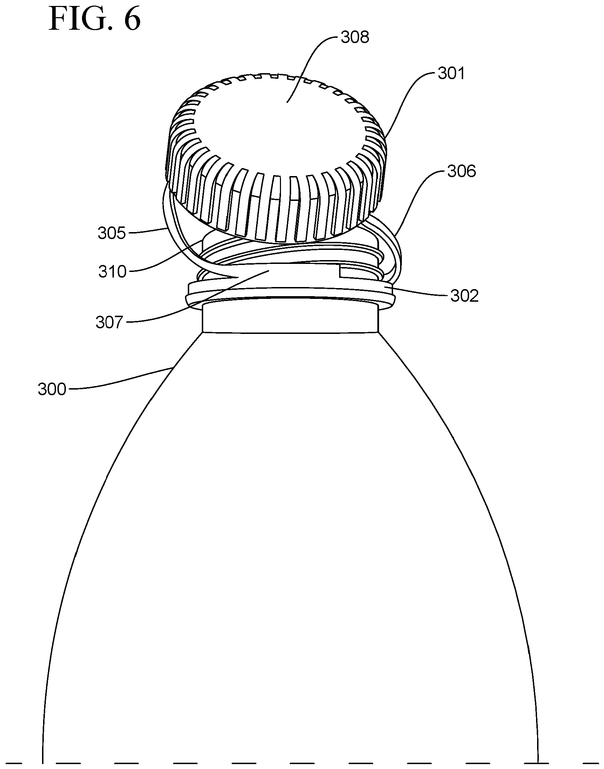

FIG. 6 shows a close up view of cap 301 after cap 301 has been unscrewed from container 300. Upon removal of cap 301 a lip 310 of cap 301 is exposed. Connection portion 305 and connection portion 306 hold cap 301 to ring member 302. Top surface 308 of cap 301 is facing away from container 300.

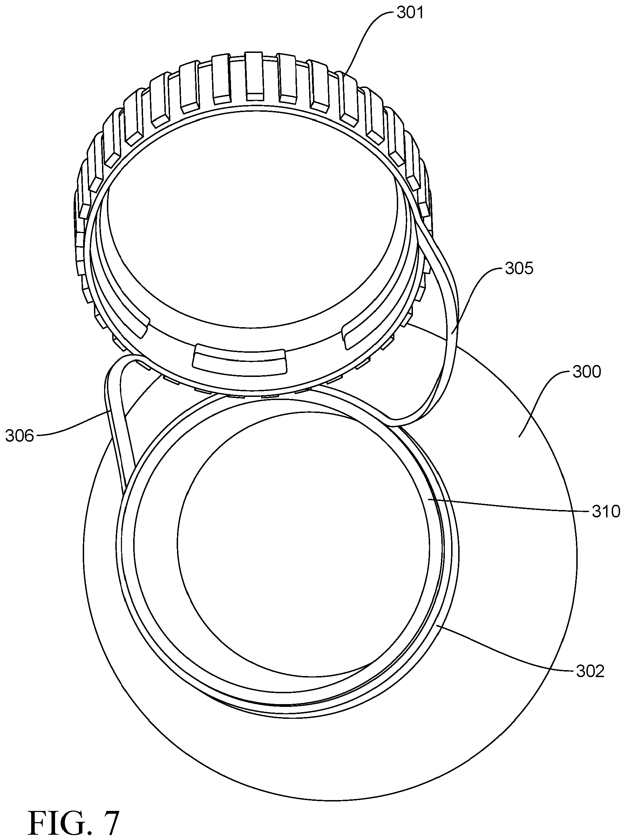

FIG. 7 shows a close up view of cap 301 where cap 301 has been pushed open from container 300. Connection portion 305 and connection portion 306 hold cap 301 to ring member 302. Until sufficient force is applied to cap 301, connection portion 305 and connection portion 306 are not long enough to let cap 301 flip past lip 310 of container 300. Because of the shortness of connection portion 305 and connection portion 306, lip 310 is in the way of cap 301 being placed in a flipped position where top surface 308 faces container 300. Once a user exerts more pressure, connection portion 305 and connection portion 306 stretch sufficiently to let cap 301 flip past lip 310 so that cap 301 is in the flipped position where top surface 308 faces container 300.

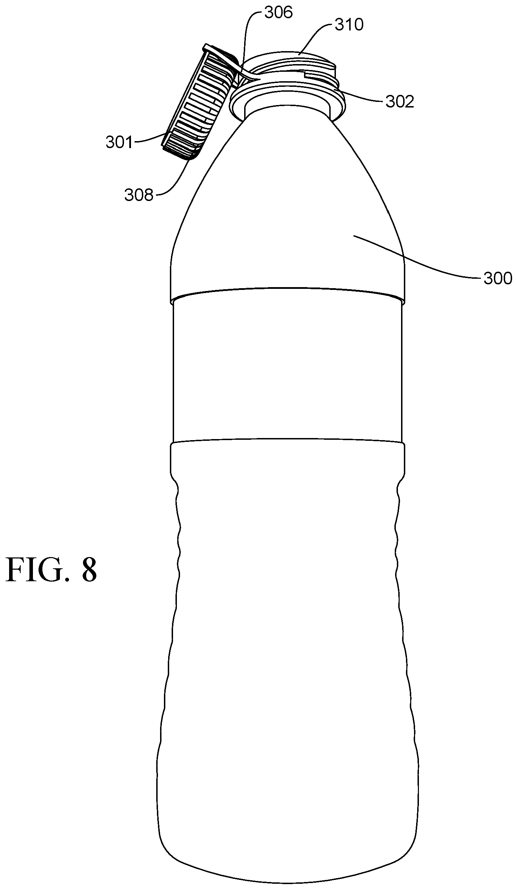

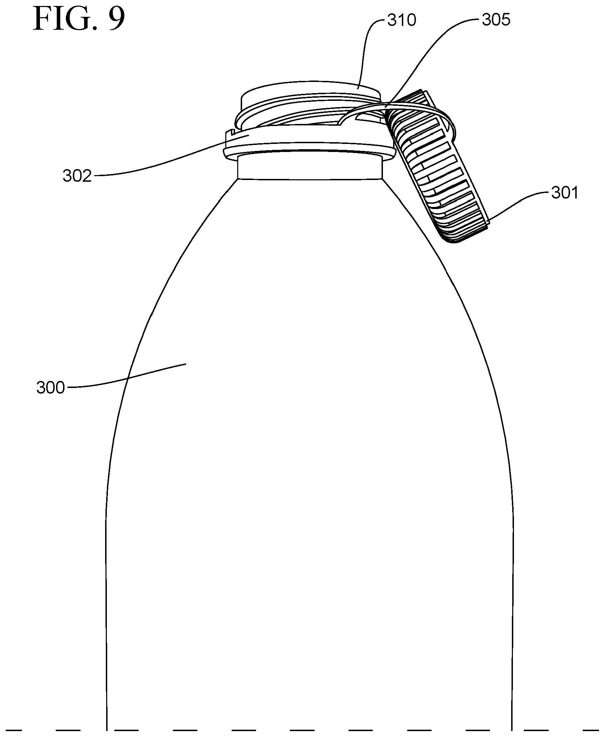

FIG. 8 and FIG. 9 show cap 301 in the flipped position where top surface 308 faces container 300. The elasticity of connection portion 305 and connection portion 306 hold cap 301 in the flipped position where top surface 308 faces container 300.

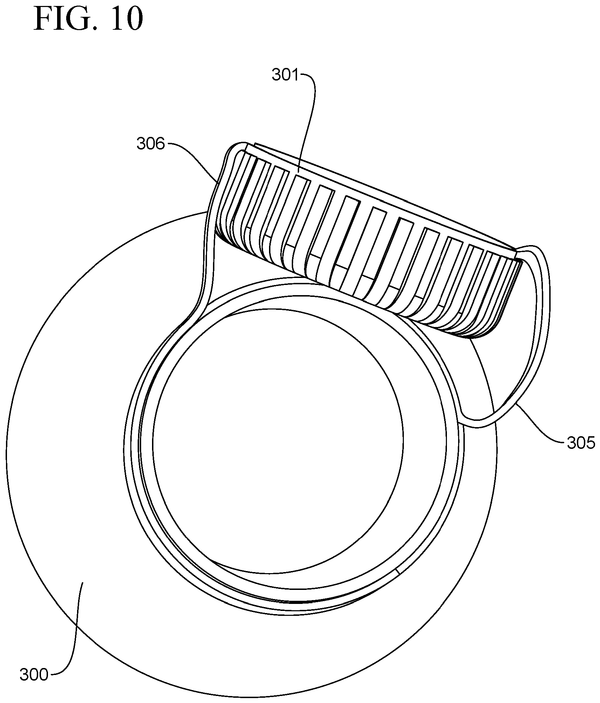

FIG. 10 is a top view illustrating that the elasticity of connection portion 305 and connection portion 306 hold cap 301 in the flipped position where top surface 308 faces container 300.

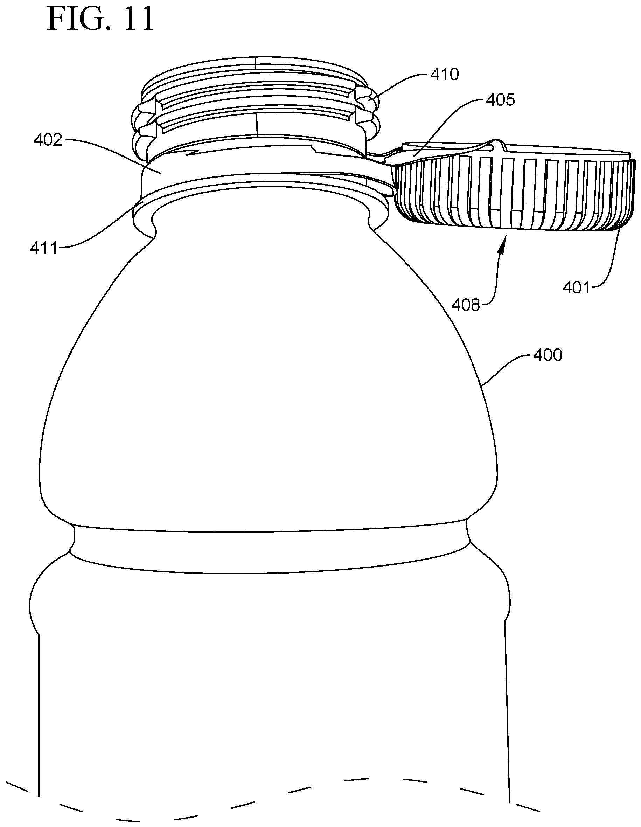

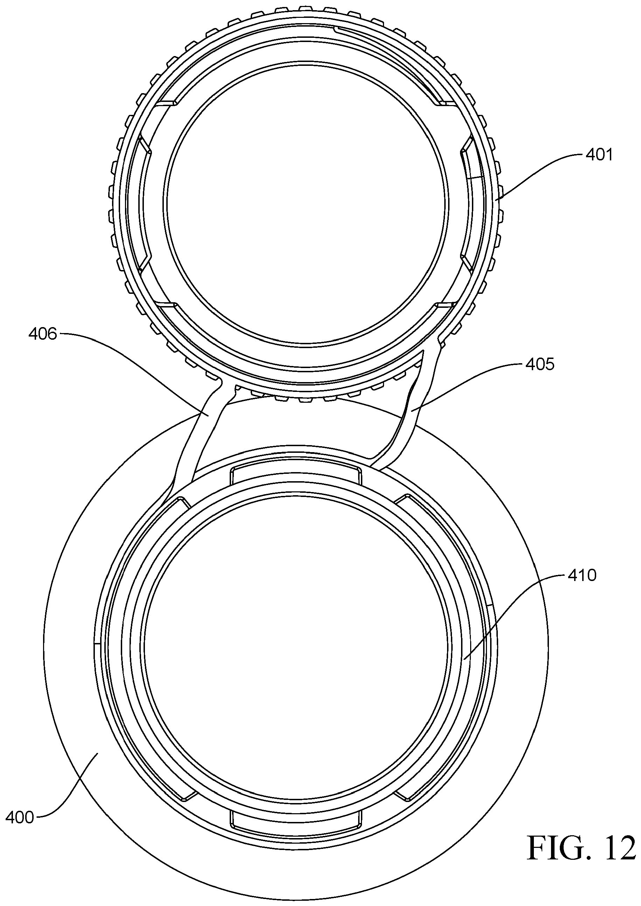

The height and diameter of a cap determine the length of connection portions necessary to allow a cap to be placed and held in a flipped position where the top surface of the cap faces the container. FIG. 11 and FIG. 12 show a container 400 with a cap 401 sized to fit over a lip 410 of container 400.

FIG. 11 and FIG. 12 show cap 401 having been unscrewed and pushed open from container 400. A connection portion 405 and a connection portion 406 hold cap 401 to a ring member 402. Until sufficient force is applied to cap 401, connection portion 405 and connection portion 406 are not long enough to let cap 401 flip past lip 410 of container 400, a ring member 402 and a ridge 411 of container 400. Because of the shortness of connection portion 405 and connection portion 406, lip 410, ring member 402 and ridge 411 are in the way of cap 401 being placed in a flipped position where top surface 408 faces container 400. Once a user exerts more pressure, connection portion 405 and connection portion 406 stretch sufficiently to let cap 401 flip past lip 410 , ring member 402 and ridge 411 so that cap 401 is in the flipped position where top surface 408 faces container 400.

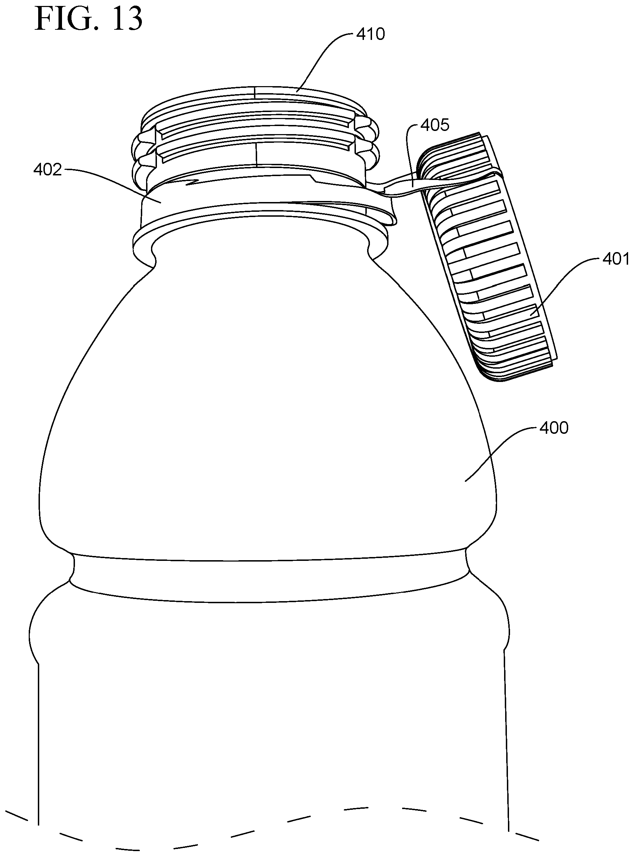

FIG. 13 shows cap 401 in the flipped position where top surface 408 faces container 400. The elasticity of connection portion 405 and connection portion 406 hold cap 401 in the flipped position where top surface 408 faces container 400.

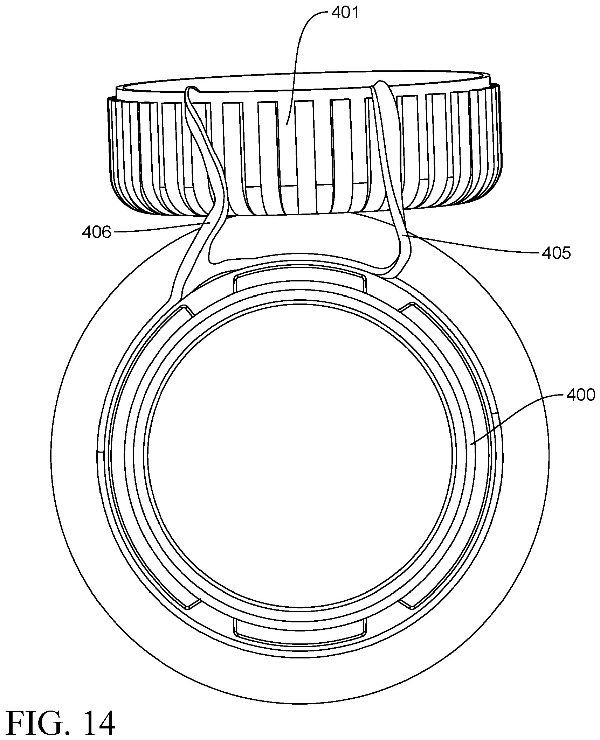

FIG. 14 is a top view illustrating that the elasticity of connection portion 405 and connection portion 406 hold cap 401 in the flipped position where top surface 408 faces container 400.

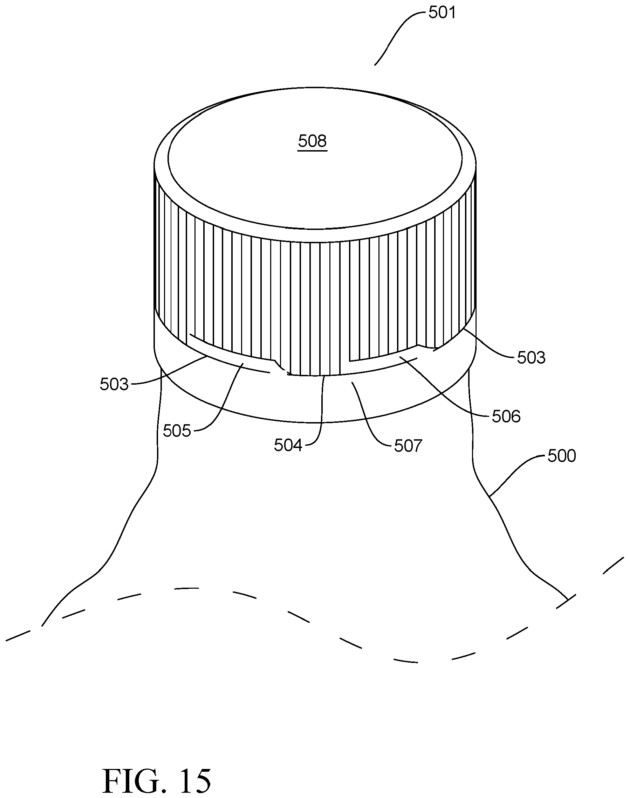

The incisions may be inverted. For example, in FIG. 15 shows a cap 501 is shown secured on a container 500. A first incision 503 and a second incision 504 form a connection portion 505 and a connection portion 506 between cap 501 and a ring member. In the embodiment shown in FIG. 15, a region 507 exists between a location where connection portion 505 is connected to ring member and where connection portion 506 is connected to cap 501. A height of cap 501 and a diameter of cap 501 affect a length of region 507 and whether region 507 even exists, as dimensions of region 507, first incision 503 and second incision 504 are all dependent on sizing connection portion 505 and sizing connection portion 506 so that when cap 501 is removed from container 500, cap 501 may be held in a flipped position against container 500 by connection portion 505 and connection portion 506.

## Claims

1. A cap (10) for a container (20), comprising:
a main body (1) having a top plate (11) and a circular sidewall (12), the top plate having a top surface, wherein two opposite sides of the circular sidewall circularly connect to each other, one periphery of the circular sidewall connects to one surface of the top plate forming a closed end (1'), and the other periphery of the circular sidewall at the opposite side of the closed end forms an opened end (1"); and
a ring member (2), which is located at the opened end of the main body;
a first incision (3) between the opened end of the main body and the ring member, the first incision having a first end and a second end, the first end being separated from the second end; and
a second incision (4) located on the main body or the ring member, the second incision having a first end and a second end, the first end of the second incision being separated from the second end of the second incision;
wherein the first incision and the second incision do not intersect and are configured so that when the cap is on the container and the cap is unscrewed, the main body separates from the ring member except for a first connection portion (5) and a second connecting portion (5) formed by the first incision and the second incision;
**characterized in that** a location and length of the first incision and the second incision are selected so that a length of the first connecting portion and a length of the second connecting portion are long enough to allow a user to, by an application of force, stretch the first connecting portion and the second connecting portion sufficiently to allow the main body to be placed into a flipped position where the top surface of the top plate faces toward the container, and so that the length of the first connecting portion and the length of the second connecting portion are short enough that the elasticity of the first connecting portion and the second connecting portion hold the main body in the flipped position once the user places the main body in the flipped position.

2. The cap as claimed in claim 1, wherein the container is a round bottle, or a round can.

3. The cap as claimed in claim 1, wherein the second incision (4) surrounds parts of the circular sidewall (12) or the ring member (2), but does not fully surround the circular sidewall or the ring member.

4. The cap as claimed in claim 1, wherein the second incision (4) surrounds less than 3/4 of the circular sidewall (12) or the ring member (2).

5. The cap as claimed in claim 1, wherein the second incision (4) surrounds less than 1/2 of the circular sidewall (12) or the ring member (2).

6. The cap as claimed in claim 1, wherein the first incision (3) includes a plurality of connector pins (31).

7. A method for providing a cap (10) for a container (20), comprising:
forming a main body (1) having a top plate (11) with a top surface and a circular sidewall (12), where two opposite sides of the circular sidewall circularly connect to each other and where one periphery of the circular sidewall connects to one surface of the top plate forming a closed end (1') so that the other periphery of the circular sidewall at the opposite side of the closed end forms an opened end (1");
forming a ring member (2) located at the opened end of the main body;
separating the ring member from the main body by a first incision (3) and by a second incision (4),
**characterized in that** a location and length of the first incision and the second incision are selected so that when the cap is on the container and the cap is unscrewed, the main body separates from the ring member except for a first connection portion (5) and a second connecting portion (5) formed by the first incision and the second incision, so that a length of the first connecting portion and a length of the second connecting portion are long enough to allow a user to, by an application of force, stretch the first connecting portion and the second connecting portion sufficiently to allow the main body to be placed into a flipped position where the top surface of the top plate faces toward the container, and so that the length of the first connecting portion and the length of the second connecting portion are short enough that the elasticity of the first connecting portion and the second connecting portion hold the main body in the flipped position once the user places the main body in the flipped position.

8. The method of claim 7, wherein the first incision (3) includes a plurality of connector pins (31).

9. The method of claim 7, wherein the container is a round bottle, or a round can.

10. The method of claim 7, wherein the second incision (4) surrounds parts of the circular sidewall (12) or the ring member (2), but does not fully surround the circular sidewall or the ring member.

11. The method of claim 7, wherein the second incision (4) surrounds less than 3/4 of the circular sidewall (12) or the ring member (2).

12. The method of claim 7, wherein the second incision (4) surrounds less than 1/2 of the circular sidewall (12) or the ring member (2).

## Patentansprüche

1. Kappe (10) für einen Behälter (20), umfassend:
einen Hauptkörper (1) mit einer oberen Platte (11) und einer kreisförmigen Seitenwand (12), wobei die obere Platte eine obere Oberfläche aufweist, wobei zwei gegenüberliegende Seiten der kreisförmigen Seitenwand kreisförmig miteinander verbunden sind, wobei ein Umfang der kreisförmigen Seitenwand eine Verbindung zu einer Oberfläche der oberen Platte herstellt, die ein geschlossenes Ende (1') bildet, und der andere Umfang der kreisförmigen Seitenwand an der gegenüberliegenden Seite des geschlossenen Endes ein offenes Ende (1") bildet; und
ein Ringelement (2), das sich am offenen Ende des Hauptkörpers befindet;
einen ersten Einschnitt (3) zwischen dem offenen Ende des Hauptkörpers und dem Ringelement, wobei der erste Einschnitt ein erstes Ende und ein zweites Ende aufweist, wobei das erste Ende von dem zweiten Ende getrennt ist; und
einen zweiten Einschnitt (4), der sich an dem Hauptkörper oder dem Ringelement befindet, wobei der zweite Einschnitt ein erstes Ende und ein zweites Ende aufweist, wobei das erste Ende des zweiten Einschnitts von dem zweiten Ende des zweiten Einschnitts getrennt ist;
wobei sich der erste Einschnitt und der zweite Einschnitt nicht schneiden und so konfiguriert sind, dass, wenn sich die Kappe auf dem Behälter befindet und die Kappe abgeschraubt wird, sich der Hauptkörper von dem Ringelement trennt, bis auf einen ersten Verbindungsabschnitt (5) und einen zweiten Verbindungsabschnitt (5), die durch den ersten Einschnitt und den zweiten Einschnitt gebildet werden;
**dadurch gekennzeichnet, dass** eine Stelle und eine Länge des ersten Einschnitts und des zweiten Einschnitts ausgewählt sind, so dass eine Länge des ersten Verbindungsabschnitts und eine Länge des zweiten Verbindungsabschnitts lang genug sind, damit ein Benutzerdurch eine Krafteinwirkung den ersten Verbindungsabschnitt und den zweiten Verbindungsabschnitt ausreichend dehnen kann, damit der Hauptkörper in eine umgedrehte Position gebracht werden kann, in der die obere Oberfläche der oberen Platte dem Behälter zugewandt ist, und so dass die Länge des ersten Verbindungsabschnitts und die Länge des zweiten Verbindungsabschnitts kurz genug sind, damit die Elastizität des ersten Verbindungsabschnitts und des zweiten Verbindungsabschnitts den Hauptkörper in der umgedrehten Position halten, sobald der Benutzer den Hauptkörper in die umgedrehten Position bringt.

2. Kappe nach Anspruch 1, wobei der Behälter eine runde Flasche oder eine runde Dose ist.

3. Kappe nach Anspruch 1, wobei der zweite Einschnitt (4) Teile der kreisförmigen Seitenwand (12) oder des Ringelements (2) umgibt, aber die kreisförmige Seitenwand oder das Ringelement nicht vollständig umgibt.

4. Kappe nach Anspruch 1, wobei der zweite Einschnitt (4) weniger als 3/4 der kreisförmigen Seitenwand (12) oder des Ringelements (2) umgibt.

5. Kappe nach Anspruch 1, wobei der zweite Einschnitt (4) weniger als 1/2 der kreisförmigen Seitenwand (12) oder des Ringelements (2) umgibt.

6. Kappe nach Anspruch 1, wobei der erste Einschnitt (3) mehrere Verbindungsstifte (31) enthält.

7. Verfahren zum Bereitstellen einer Kappe (10) für einen Behälter (20), umfassend:
Bilden eines Hauptkörpers (1) mit einer oberen Platte (11) mit einer oberen Oberfläche und einer kreisförmigen Seitenwand (12), wobei zwei gegenüberliegende Seiten der kreisförmigen Seitenwand kreisförmig miteinander verbunden sind und wobei ein Umfang der kreisförmigen Seitenwand eine Verbindung zu einer Oberfläche der oberen Platte herstellt, die ein geschlossenes Ende (1') bildet, so dass der andere Umfang der kreisförmigen Seitenwand an der gegenüberliegenden Seite des geschlossenen Endes ein offenes Ende (1") bildet;
Bilden eines Ringelements (2), das sich an dem offenen Ende des Hauptkörpers befindet;
Trennen des Ringelements von dem Hauptkörper durch einen ersten Einschnitt (3) und durch einen zweiten Einschnitt (4),
**dadurch gekennzeichnet, dass** eine Stelle und eine Länge des ersten Einschnitts und des zweiten Einschnitts ausgewählt sind, so dass, wenn sich die Kappe auf dem Behälter befindet und die Kappe abgeschraubt wird, sich der Hauptkörper von dem Ringelement trennt, bis auf einen ersten Verbindungsabschnitt (5) und einen zweiten Verbindungsabschnitt (5), die durch den ersten Einschnitt und den zweiten Einschnitt gebildet werden, so dass eine Länge des ersten Verbindungsabschnitts und eine Länge des zweiten Verbindungsabschnitts lang genug sind, damit ein Benutzer durch eine Krafteinwirkung den ersten Verbindungsabschnitt und den zweiten Verbindungsabschnitt ausreichend dehnen kann, damit der Hauptkörper in eine umgedrehte Position gebracht werden kann, in der die obere Oberfläche der oberen Platte dem Behälter zugewandt ist, und so dass die Länge des ersten Verbindungsabschnitts und die Länge des zweiten Verbindungsabschnitts kurz genug sind, damit die Elastizität des ersten Verbindungsabschnitts und des zweiten Verbindungsabschnitts den Hauptkörper in der umgedrehten Position halten, sobald der Benutzer den Hauptkörper in die umgedrehte Position bringt.

8. Verfahren nach Anspruch 7, wobei der erste Einschnitt (3) mehrere Verbindungsstifte (31) enthält.

9. Verfahren nach Anspruch 7, wobei der Behälter eine runde Flasche oder eine runde Dose ist.

10. Verfahren nach Anspruch 7, wobei der zweite Einschnitt (4) Teile der kreisförmigen Seitenwand (12) oder des Ringelements (2) umgibt, aber die kreisförmige Seitenwand oder das Ringelement nicht vollständig umgibt.

11. Verfahren nach Anspruch 7, wobei der zweite Einschnitt (4) weniger als 3/4 der kreisförmigen Seitenwand (12) oder des Ringelements (2) umgibt.

12. Verfahren nach Anspruch 7, wobei der zweite Einschnitt (4) weniger als 1/2 der kreisförmigen Seitenwand (12) oder des Ringelements (2) umgibt.

## Revendications

1. Bouchon (10) pour un récipient (20), comprenant :
un corps principal (1) ayant une plaque supérieure (11) et une paroi latérale circulaire (12), la plaque supérieure ayant une surface supérieure, dans lequel deux côtés opposés de la paroi latérale circulaire se raccordent de manière circulaire l'un à l'autre, une périphérie de la paroi latérale circulaire se raccorde à une surface de la plaque supérieure formant une extrémité fermée (1'), et l'autre périphérie de la paroi latérale circulaire au niveau du côté opposé de l'extrémité fermée forme une extrémité ouverte (1") ; et
un élément annulaire (2), qui est situé au niveau de l'extrémité ouverte du corps principal ;
une première incision (3) entre l'extrémité ouverte du corps principal et l'élément annulaire, la première incision ayant une première extrémité et une seconde extrémité, la première extrémité étant séparée de la seconde extrémité ; et
une seconde incision (4) située sur le corps principal ou l'élément annulaire, la seconde incision ayant une première extrémité et une seconde extrémité, la première extrémité de la seconde incision étant séparée de la seconde extrémité de la seconde incision ;
dans lequel la première incision et la seconde incision ne se coupent pas et sont configurées de sorte que lorsque le bouchon se trouve sur le récipient et que le bouchon est dévissé, le corps principal se sépare de l'élément annulaire à l'exception d'une première partie de raccordement (5) et d'une seconde partie de raccordement (5) formées par la première incision et la seconde incision ;
**caractérisé en ce qu'**un emplacement et une longueur de la première incision et de la seconde incision sont sélectionnés de telle sorte qu'une longueur de la première partie de raccordement et qu'une longueur de la seconde partie de raccordement soient suffisamment longues pour permettre à un utilisateur, par une application de force, d'étirer la première partie de raccordement et la seconde partie de raccordement suffisamment pour permettre au corps principal d'être placé dans une position retournée où la surface supérieure de la plaque supérieure est tournée vers le récipient, et de telle sorte que la longueur de la première partie de raccordement et que la longueur de la seconde partie de raccordement soient suffisamment courtes pour que l'élasticité de la première partie de raccordement et de la seconde partie de raccordement maintienne le corps principal dans la position retournée une fois que l'utilisateur place le corps principal dans la position retournée.

2. Bouchon selon la revendication 1, dans lequel le récipient est une bouteille ronde ou une canette ronde.

3. Bouchon selon la revendication 1, dans lequel la seconde incision (4) entoure des parties de la paroi latérale circulaire (12) ou de l'élément annulaire (2), mais n'entoure pas complètement la paroi latérale circulaire ou l'élément annulaire.

4. Bouchon selon la revendication 1, dans lequel la seconde incision (4) entoure moins des 3/4 de la paroi latérale circulaire (12) ou de l'élément annulaire (2).

5. Bouchon selon la revendication 1, dans lequel la seconde incision (4) entoure moins de 1/2 de la paroi latérale circulaire (12) ou de l'élément annulaire (2).

6. Bouchon selon la revendication 1, dans lequel la première incision (3) comprend une pluralité de broches de connecteur (31).

7. Procédé pour fournir un bouchon (10) pour un récipient (20), comprenant :
la formation d'un corps principal (1) ayant une plaque supérieure (11) avec une surface supérieure et une paroi latérale circulaire (12), où deux côtés opposés de la paroi latérale circulaire se raccordent de manière circulaire l'un à l'autre et où une périphérie de la paroi latérale circulaire se raccorde à une surface de la plaque supérieure formant une extrémité fermée (1') de sorte que l'autre périphérie de la paroi latérale circulaire au niveau du côté opposé de l'extrémité fermée forme une extrémité ouverte (1") ;
la formation d'un élément annulaire (2) situé au niveau de l'extrémité ouverte du corps principal ;
la séparation de l'élément annulaire du corps principal par une première incision (3) et par une seconde incision (4),
**caractérisé en ce qu'**un emplacement et une longueur de la première incision et de la seconde incision sont sélectionnés de sorte que lorsque le bouchon se trouve sur le récipient et que le bouchon est dévissé, le corps principal se sépare de l'élément annulaire à l'exception d'une première partie de raccordement (5) et une d'une seconde partie de raccordement (5) formées par la première incision et la seconde incision, de sorte qu'une longueur de la première partie de raccordement et qu'une longueur de la seconde partie de raccordement soient suffisamment longues pour permettre à un utilisateur, par une application de force, d'étirer la première partie de raccordement et la seconde partie de raccordement suffisamment pour permettre au corps principal d'être placé dans une position retournée où la surface supérieure de la plaque supérieure est tournée vers le récipient, et de sorte que la longueur de la première partie de raccordement et que la longueur de la seconde partie de raccordement soit suffisamment courtes pour que l'élasticité de la première partie de raccordement et de la seconde partie de raccordement maintienne le corps principal dans la position retournée une fois que l'utilisateur place le corps principal dans la position retournée.

8. Procédé selon la revendication 7, dans lequel la première incision (3) comprend une pluralité de broches de raccordement (31).

9. Procédé selon la revendication 7, dans lequel le récipient est une bouteille ronde ou une canette ronde.

10. Procédé selon la revendication 7, dans lequel la seconde incision (4) entoure des parties de la paroi latérale circulaire (12) ou de l'élément annulaire (2), mais n'entoure pas entièrement la paroi latérale circulaire ou l'élément annulaire.

11. Procédé selon la revendication 7, dans lequel la seconde incision (4) entoure moins des 3/4 de la paroi latérale circulaire (12) ou de l'élément annulaire (2).

12. Procédé selon la revendication 7, dans lequel la seconde incision (4) entoure moins de 1/2 de la paroi latérale circulaire (12) ou de l'élément annulaire (2).
